# EUROPEAN PATENT APPLICATION

(11) **EP 4 765 592 A1**
(43) Date of publication of application: **24.06.2026**
(21) Application number: 25222496.9
(22) Date of filing: 11.12.2025
(51) Int. Cl.: H02K 3/52, H02K 5/22, H02K 5/08, H02K 15/12, H02K 5/173, H02K 9/22

(54) **STATOR ELECTRIC BOARD ASSEMBLY FOR AN ELECTRIC MOTOR AND ELECTRIC MOTOR**

(30) Priority: 17.12.2024 IT 202400028764
(71) Applicant: EMC FIME S.R.L., 60022 Castelfidardo, Ancona (IT)
(72) Inventor: ANTONINI, Paolo, 60022 Castelfidardo (AN) (IT); BOLOGNINI, Martina, 60022 Castelfidardo (AN) (IT); BRUNI, Giuseppe, 60022 Castelfidardo (AN) (IT); MAGNATERRA, Marco, 60022 Castelfidardo (AN) (IT); PONTINO, Savino, 60022 Castelfidardo (AN) (IT); TORREGIANI, Stefano, 60022 Castelfidardo (AN) (IT)
(74) Representative: Leihkauf, Steffen Falk

(57) **Abstract**

A stator (4) - electric board (11) assembly of an electric motor (3) comprises a stator (4), a bearing-carrier hub (8) inserted into the stator (4) for supporting and centering a rotor shaft (10), an electric board (11), and an insulating body (14) made of polymer resin overmolded by injection on and around the stator (4), the bearing-carrier hub (8), and the electric board (11) so as to completely fill the gaps formed therebetween and join the stator (4), the bearing-carrier hub (8), and the electric board (11) in a single self-supporting body, in which a front surface (23) of a connection flange (25) of the bearing-carrier hub (8) and contact terminals (17) of the electric board (11) are oriented axially with respect to a motor axis (19) toward the outside of the stator (4) - electric board (11) assembly on the same connection side (20) and positioned outside the insulating body (14), exposed and accessible.

## Description

The invention relates to a stator-electric board assembly for an electric motor, an electric motor, and a method of manufacturing the electric motor.

Electric motors are known in which the stator, after being wound, is overmolded with a thermoplastic or thermosetting material to form protective insulation against atmospheric agents, and in which a housing of electronics of the electric motor is subsequently screwed to the overmolded stator, in particular to internally threaded bushings embedded in the overmolded polymer material.

The overmolding processes of known stators still have disadvantages relating to the subsequent mechanical and electrical connection of a control electric board to the stator. In particular, during overmolding, the molten polymer material risks covering electrical contact terminals, for example filling female terminals of Faston-type electrical contacts.

The layer of polymer material overmolded around the stator protects only the stator against atmospheric agents, but does not also protect the electric board (star center board) connected and electrically contacted from the outside to the stator.

Finally, to date, correct positioning of the stator components inside the mold during injection overmolding is not ensured, so that the pressure of the injected polymer resin tends to shift the components (metal core, winding, threaded bushings, bearing seats, electrical contacts) into unplanned positions.

The aim of the invention is therefore to propose an improved stator-electric board assembly for an electric motor, as well as a method of manufacturing the electric motor, having characteristics capable of overcoming at least some of the drawbacks of the known art.

A particular aim of the invention is to provide a stator-electric board assembly, an electric motor, and a manufacturing method that improve protection against atmospheric agents not only for the stator components but also for the electric board.

A further particular aim of the invention is to provide a stator-electric board assembly, an electric motor, and a manufacturing method that facilitate the mechanical and electrical connection between the stator and the electric board (star center board) and/or the mechanical and electrical connection between the stator-electric board assembly and an additional external control electric board.

A further particular aim of the invention is to provide a stator-electric board assembly, an electric motor, and a manufacturing method that reduce the risk of undesired overmolding of electrical terminals.

A further particular aim of the invention is to provide a stator-electric board assembly, an electric motor, and a manufacturing method that allow reliable and easy positioning of all the components involved in injection overmolding inside a polymer injection mold, such as to allow a rapid overmolding process at high resin pressure (the latter being advantageous for reliably filling all gaps between components).

At least some of the aims are achieved by a stator-electric board assembly according to claim 1 and by a method according to claim 12.

Preferred and advantageous embodiments are the subject of the dependent claims.

### Brief description of the drawings

In order to better understand the invention and appreciate its advantages, some embodiments thereof will be described below, with reference to the figures, in which:

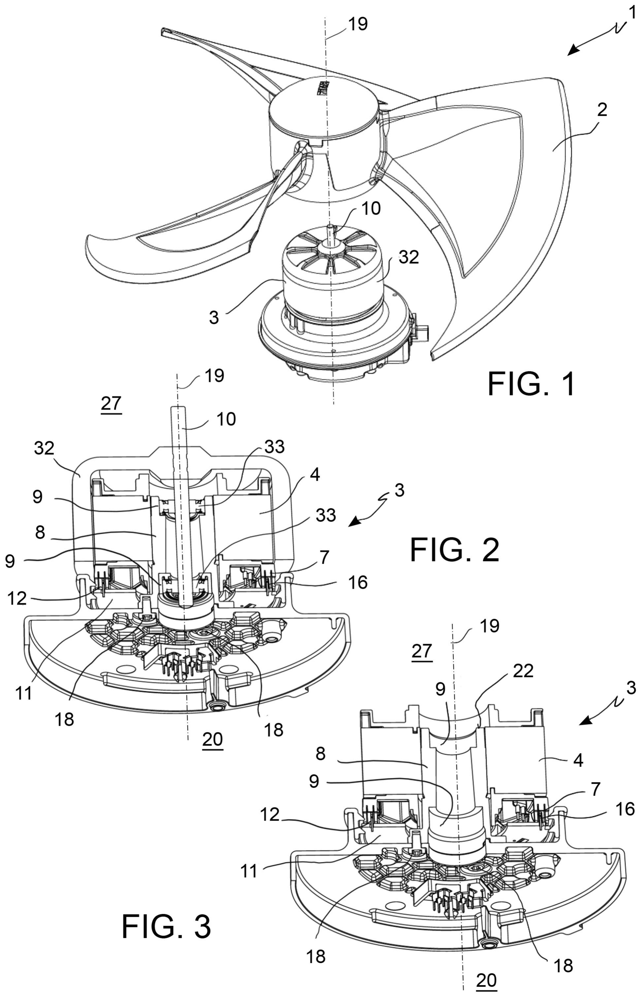

Figure 1 shows a fan with an impeller and an electric motor,
Figure 2 is a perspective and sectional view of an electric motor usable in the fan of figure 1, in which a part of the overmolded polymer portion has been removed to better show the shape and positions of the components,
Figure 3 is a perspective and sectional view of the electric motor of figure 2, in which the rotor, the motor shaft, and two bearings have been removed,

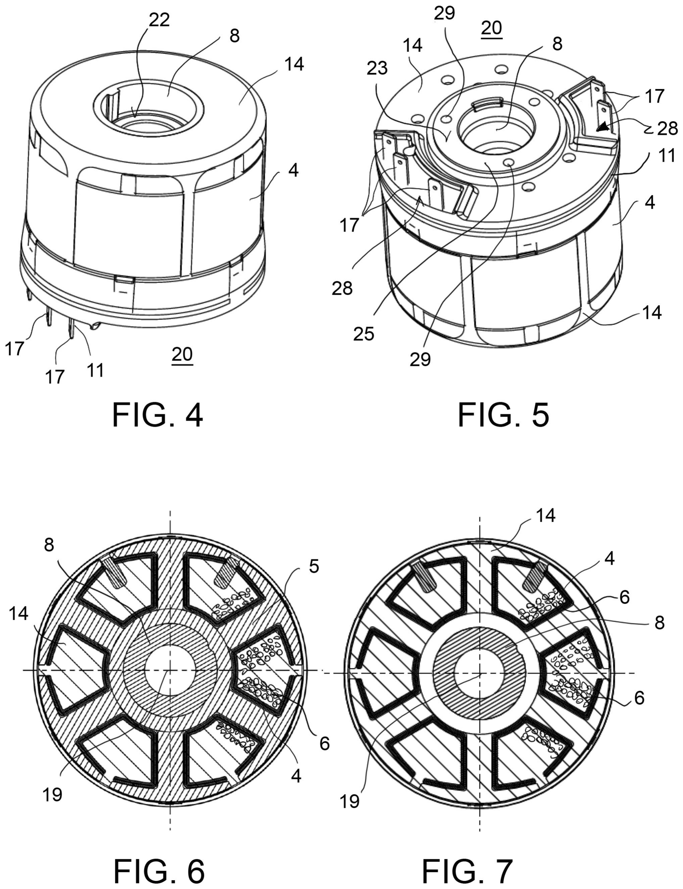

Figures 4 and 5 are perspective views of a stator-electric board assembly of the motor of figure 3, in which a bearing-carrier hub is also visible and in which the individual components of the stator-electric board assembly are joined and at least partially covered by an injection-overmolded polymer body,
Figures 6 and 7 are sectional views of the stator-electric board assembly of figure 4, according to two different section planes orthogonal to a motor rotation axis, showing areas filled with the overmolded polymer resin,

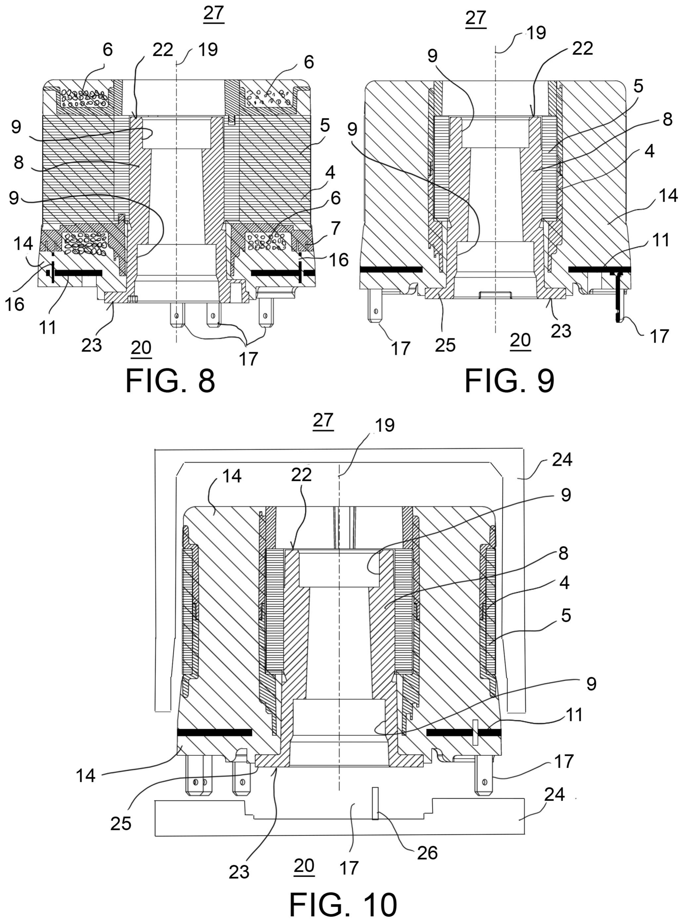

Figures 8, 9, and 10 are sectional views of the stator-electric board assembly of figure 4, according to three different radial section planes with respect to a motor rotation axis, showing areas filled with the overmolded polymer resin,
Figure 10 also schematically shows half-molds of a mold for injection molding of the polymer resin,

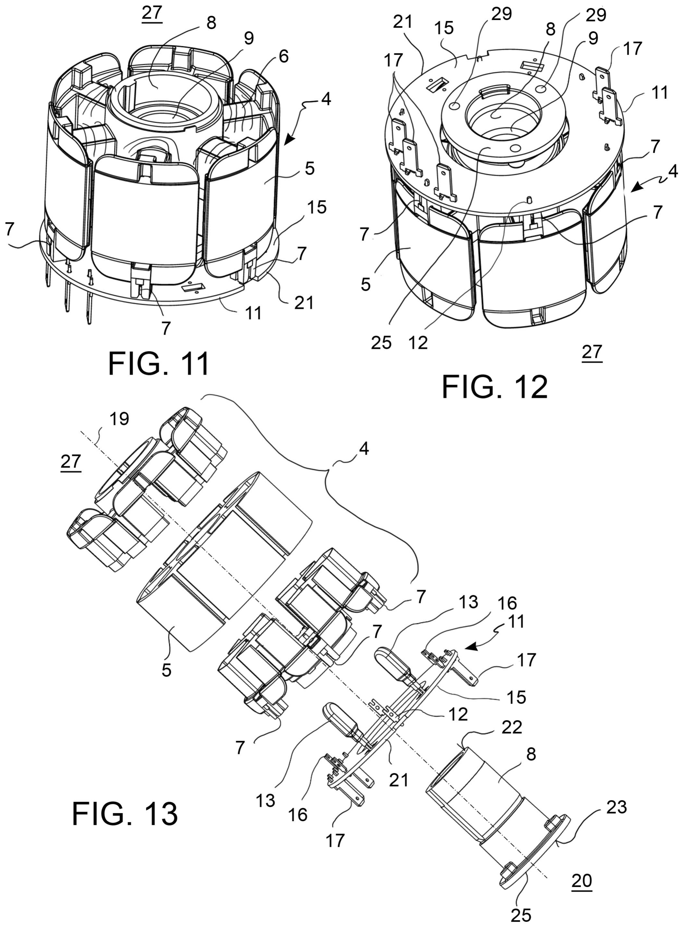

Figures 11 and 12 are perspective views of the semi-finished stator-electric board assembly, before overmolding with polymer material, for the production of the stator-electric board assembly shown in figure 4,
Figure 13 is an exploded view of the semi-finished stator-electric board assembly of figure 11,

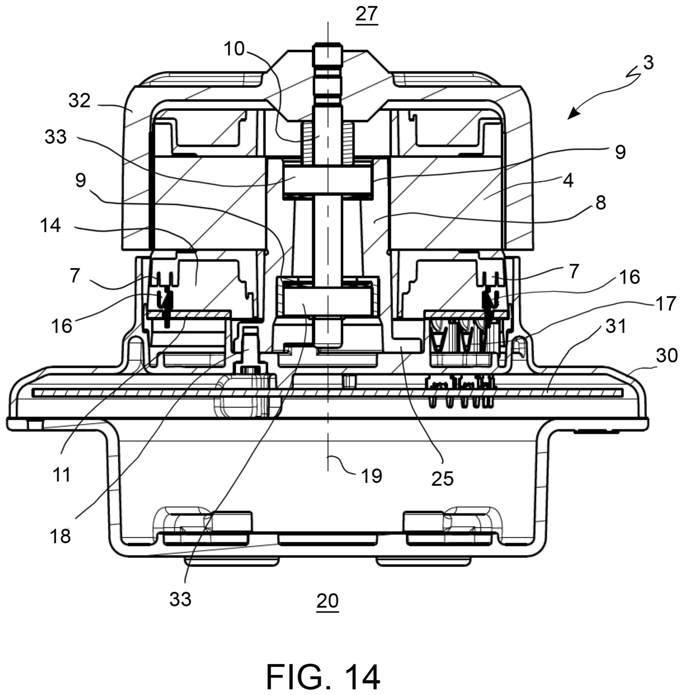

Figure 14 is a sectional view of an electric motor with an injection-overmolded stator-electric board assembly, a rotor, an additional electronic control board external to the stator-electric board assembly, and with an electronic board housing.

### Description of embodiments

A stator 4-electric board 11 assembly of or for an electric motor 3, in particular a three-phase brushless motor, comprises:
one stator 4 comprising a pack of metal laminations 5 stacked and connected to one another, one or more stator windings 6, for example made of copper, and, optionally, first connection terminals 7 of the windings 6,
a tubular bearing-carrier hub 8, inserted into the stator 4 and forming one or more, preferably two, bearing seats 9 for supporting and centering a rotor shaft 10, and a connection flange 25,
an electric board 11 (preferably configured as a connection board) comprising:
   - a support substrate 15
   - a contact configuration 12 (for example a star-center configuration), optionally with a plurality of second connection terminals 16 inserted with the (optional) first connection terminals 7, for supplying, for example three-phase supply, the stator windings 6, and
   - optionally and advantageously, but not mandatorily, one or more, preferably two, heat protectors 13 (e.g. thermal cut-off devices, understood as devices that interrupt the motor power supply circuit when the internal motor temperature exceeds a preset threshold) placed in a heat exchange relationship with a respective stator winding 6, and
   - a plurality of third contact terminals 17 for an external electrical connection with the contact configuration 12 and, if provided, with the heat protectors 13,
an insulating body 14 made of polymer resin overmolded by injection on and around the stator 4, the bearing-carrier hub 8, and the electric board 11 so as to completely fill the space (or gaps) formed therebetween and join the stator 4, the bearing-carrier hub 8, and the electric board 11 in a single self-supporting body,
in which a front surface 23 of the connection flange 25 and the third terminals 17 are oriented in an axial direction with respect to a motor axis 19 towards the outside of the stator 4-electric board 11 assembly on the same connection side 20 and, optionally, positioned outside the insulating body 14, that is, free of said polymer resin, freely exposed and accessible.

The new configuration of the stator 4-electric board 11 assembly ensures high protection from atmospheric agents, in particular for the stator windings 6, ensuring for example a protection class IP 54.

Advantageously, the electric board 11 is applied to the stator 4, prior to the resin coating (injection overmolding) of the insulating body 14, by simple mechanical pressure insertion in a direction parallel to the motor axis 19, in which the final mechanical locking between the electric board 11 and the stator 4 is achieved by the overmolded insulating body 14.

If the above said second connection terminals 16 and first connection terminals 7 are provided, the mechanical pressure insertion occurs between (or exclusively between) the second connection terminals 16 and the first connection terminals 7, in which the second terminals 16 of the electric board 11 are configured as male terminals and the first connection terminals 7 of the stator windings 6 are made as female terminals, for example of Faston type.

Preferably, the second terminals 16 of the electric board 11 are oriented axially (relative to the motor axis 19) toward the inside of the stator 4-electric board 11 assembly and positioned adjacent to an outer peripheral edge 21 of the electric board 11, for example at a distance from the outer peripheral edge 21 smaller than 1/5 or 1/8 of an outer diameter of the electric board 11. This allows easy and visual verification of the complete insertion of the contacts into one another, and optionally to tin the contacts after their mutual insertion and before the resin coating (injection overmolding) of the insulating body 14.

With further advantage, the third contact terminals 17 are configured as male terminals. A different configuration as female terminals would involve a risk of filling the third contact terminals 17 with polymer resin during overmolding of the insulating body 14 and would make it difficult to tin the third contact terminals 17.

In one example, the electric board 11 consists solely of the support substrate 15, the contact configuration 12 with the second connection terminals 16, the heat protectors 13, and the third contact terminals 17, and nothing else. This makes the stator 4-electric board 11 assembly, and therefore the entire electric motor 3, very versatile, usable with different external control electronic boards 31 customized for a specific use of the electric motor 3 and connectable to the third contact terminals 17.

Similarly, the only components functionally used of the electric board 11 are composed of the support substrate 15, the contact configuration 12 with the second connection terminals 16, the heat protectors 13, and the third contact terminals 17. The skilled person of the field will understand that an electric board that, for reasons of mass production, contains additional electrical components that are otherwise not used (and therefore cannot be defined as "functionally used components") would still fall within this specific example and would be included in the invention.

The bearing-carrier hub 8 is made of metallic material, preferably aluminum or aluminum alloy, and forms a first end surface 22 and a second end surface 23 opposite to each other, planar and orthogonal to the motor axis 19, for axial support of the stator 4-electric board 11 assembly in an injection molding mold 24, and as a reliable and rigid geometric reference for closing the injection molding mold 24.

Both the first end surface 22 and the second end surface 23 are advantageously free of polymer resin of the insulating body and exposed as a metal surface toward the outside of the stator 4-electric board 11 assembly. This ensures a reliable and unchanging positioning inside the mold 24 during the injection resin coating.

The mold 24 forms thrust pins 26 on a side corresponding to the connection side 20, which during molding of the insulating body 14 rest against the electric board 11 toward a rotor side 27 opposite the connection side 20, in such a way as to prevent or reduce deformation of the electric board 11 during the injection of the polymer resin into the mold 24 from the rotor side 27 toward the connection side 20.

The thrust pins 26 are positioned at the contacting cavities or windows 28 (preferably two contacting windows 28 diametrically opposite) formed in the insulating body 14 on the connection side 20 at the third contact terminals 17.

The connection flange 25 forms (the second end surface 23 and within it) a plurality of, for example, three threaded connection holes 29 for connecting the stator 4-electric board 11 assembly with a support housing 30 of the electric motor 3.

An external control electronic board 31 (PCB) containing electronic and electrical power components is housed inside the support housing 30 and electrically connected to the electric board 11 by insertion and/or tin plating with the third contact terminals 17. The electrical connection space between the external control electronic board 31 and the third contact terminals 17 is free of resin coating, and sealing in this area is ensured for example by means of a gasket.

The rotor shaft 10 of the electric motor 3 is rotatably housed in the bearing-carrier hub 8 by means of two bearings 33 positioned in the bearing seats 9. An external rotor 32 of the electric motor 3, e.g. a cup-shaped external rotor 32, is connected to the rotor shaft 10.

The electric motor 3 configured and manufactured in this manner may be used for example in an axial fan 1, for example for a heat pump, comprising said electric motor 3 and an impeller 2 connected to the rotor 32 of the electric motor 3.

The invention also concerns a method of manufacturing the stator 4-electric board 11 assembly, comprising a step of assembling a stator (4)-electric board (11) assembly for an electric motor (3), comprising:
- providing a stator (4) comprising a pack of metal laminations (5) stacked and connected to one another, one or more stator windings (6), and, optionally, first connection terminals (7) of the windings (6),
- positioning in the stator (4) a tubular bearing-carrier hub (8) forming one or more bearing seats (9) for supporting and centering a rotor shaft (10), and a connection flange (25),
- providing an electric board (11) comprising a support substrate (15), a contact configuration (12) with a plurality of second connection terminals (16) for supplying the stator windings (6), optionally one or more heat protectors (13), and a plurality of third contact terminals (17) for an external electrical connection with the contact configuration (12) and/or with the heat protectors (13),
- applying the electric board (11) to the stator (4) by pressure displacement of the electric board (11) against the stator (4) in a direction parallel to a motor axis (19) and, optionally, with simultaneous mechanical insertion of the second connection terminals (16) with the first connection terminals (7), and, if provided, with simultaneous positioning of the heat protectors (13) in a heat exchange relationship with a respective stator winding (6) of the stator (4),
- making an insulating body (14) by injection overmolding of a polymer resin on and around the stator (4), the bearing-carrier hub (8), and the electric board (11) so as to completely fill the gaps formed therebetween and join the stator (4), the bearing-carrier hub (8), and the electric board (11) in a single self-supporting body,

in which a front surface (23) of the connection flange (25) and the third contact terminals (17) are oriented in an axial direction relative to the motor axis (19) toward the outside of the stator (4)-electric board (11) assembly on the same connection side (20) and positioned outside the insulating body (14) and exposed and accessible.

The method may further comprise:
- performing the injection overmolding by means of a mold (24) having thrust pins (26) on a side corresponding to the connection side (20),
- during molding of the insulating body (14), placing the thrust pins (26) against the electric board (11) toward a rotor side (27) opposite the connection side (20),
- injecting polymer resin into the mold (24) from the rotor side (27) toward the connection side (20).

The method may further comprise:
- making the bearing-carrier hub (8) of metallic material or (aluminum alloy or) aluminum with a first end surface (22) and a second end surface (23) opposite to each other, planar and orthogonal to the motor axis (19),
- using the first end surface (22) and the second end surface (23) for axial support of the stator (4)-electric board (11) assembly in an injection molding mold (24), and as a reliable and rigid geometric reference for closing the injection molding mold (24).

The stator 4-electric board 11 assembly, the motor 3, and the manufacturing method achieve the objectives of the invention. In particular, the following are obtained:
- an improvement in protection against atmospheric agents not only for the stator components but also for the electric board,
- an easy mechanical and electrical connection between the stator and the electric board,
- an easy mechanical and electrical connection between the stator-electric board assembly and the external control electric board,
- a reduction in the risk of undesired overmolding of electrical terminals,
- a reliable and easy positioning of all components involved in injection overmolding inside the injection mold,
- rapid overmolding at high resin pressure.

### List of references in the figures

fan 1
impeller 2
electric motor 3
stator 4
pack of metal laminations 5
stator windings 6
first connection terminals 7
bearing-carrier hub 8
bearing seats 9
rotor shaft 10
electric board 11
contact configuration 12
heat protectors 13
insulating body 14
support substrate 15
second connection terminals 16
third contact terminals 17
connection screws 18
motor axis 19
connection side 20
outer peripheral edge 21 of the electric board
first end surface 22
second end surface 23
mold 24
connection flange 25
thrust pins 26
rotor side 27
contacting windows 28
connection holes 29
support housing 30
external control electronic board 31
external rotor 32
bearings 33

## Claims

1. A stator (4) - electric board (11) assembly for an electric motor (3), comprising:
- a stator (4) comprising a pack of metal laminations (5) stacked and connected to one another, one or more stator windings (6),
- a tubular bearing-carrier hub (8), inserted into the stator (4) and forming one or more bearing seats (9) for supporting and centering a rotor shaft (10), and a connection flange (25),
- an electric board (11) comprising:
a support substrate (15)
a contact configuration (12) for powering the stator windings (6), and
optionally one or more heat protectors (13) placed in a heat exchange relationship with a respective stator winding (6), and
a plurality of third contact terminals (17) for an external electrical connection with the contact configuration (12) and/or with the heat protectors (13),
- an insulating body (14) made of polymer resin overmolded by injection on and around the stator (4), the bearing-carrier hub (8), and the electric board (11) so as to completely fill the gaps formed therebetween and join the stator (4), the bearing-carrier hub (8), and the electric board (11) in a single self-supporting body,
wherein a front surface (23) of the connection flange (25) and the third contact terminals (17) are oriented in an axial direction with respect to a motor axis (19) towards the outside of the stator (4) - electric board (11) assembly on the same connection side (20) and, optionally, positioned outside the insulating body (14), exposed and accessible,
wherein, optionally, the stator (4) comprises first connection terminals (7) of the windings (6) and the contact configuration (12) comprises a plurality of second connection terminals (16) inserted with the first connection terminals (7).

2. A stator (4) - electric board (11) assembly according to claim 1, wherein the electric board (11) is applied to the stator (4), prior to the injection overmolding of the insulating body (14), by simple mechanical pressure insertion in a direction parallel to the motor axis (19), wherein a final mechanical locking between the electric board (11) and the stator (4) is accomplished by the overmolded insulating body (14).

3. A stator (4) - electric board (11) assembly according to claim 2, wherein the stator (4) comprises first connection terminals (7) of the windings (6) and the contact configuration (12) comprises a plurality of second connection terminals (16) insertable or inserted with the first connection terminals (7), wherein the mechanical pressure insertion occurs exclusively between the second connection terminals (16) and the first connection terminals (7), wherein the second connection terminals (16) are configured as male terminals and the first connection terminals (7) are made as female terminals.

4. A stator (4) - electric board (11) assembly according to any one of the preceding claims, wherein the stator (4) comprises first connection terminals (7) of the windings (6) and the contact configuration (12) comprises a plurality of second connection terminals (16) insertable or inserted with the first connection terminals (7), wherein the second connection terminals (16) of the electric board (11) are oriented axially, with respect to the motor axis (19), towards the inside of the stator (4) - electric board (11) assembly and positioned adjacent to an outer peripheral edge (21) of the electric board (11), or at a distance from the outer peripheral edge (21) less than 1/5 or 1/8 of an outer diameter of the electric board (11).

5. A stator (4) - electric board (11) assembly according to any one of the preceding claims, wherein the third contact terminals (17) are configured as male terminals.

6. A stator (4) - electric board (11) assembly according to any one of the preceding claims, wherein the stator (4) comprises first connection terminals (7) of the windings (6) and the contact configuration (12) comprises a plurality of second connection terminals (16) insertable or inserted with the first connection terminals (7),
wherein the electric board (11) only consists of the support substrate (15), the contact configuration (12) with the second connection terminals (16), the heat protectors (13), and the third contact terminals (17), or:
wherein the only functionally used components of the electric board (11) consist in the support substrate (15), the contact configuration (12) with the second connection terminals (16), the heat protectors (13), and the third contact terminals (17).

7. A stator (4) - electric board (11) assembly according to any one of the preceding claims, wherein the bearing-carrier hub (8) is made of metal material or aluminum and forms a first end surface (22) and a second end surface (23) opposite to each other, planar and orthogonal to the motor axis (19), for axially supporting the stator (4) - electric board (11) assembly in an injection molding mold (24), and as a reliable and rigid geometric reference for closing the injection molding mold (24).

8. A stator (4) - electric board (11) assembly according to claim 7, wherein both the first (22) and second (23) end surfaces are free of polymer resin of the insulating body (14) and exposed as a metal surface towards the outside of the stator (4) - electric board (11) assembly.

9. A stator (4) - electric board (11) assembly according to any one of the preceding claims, comprising two diametrically opposite contacting cavities or windows (28), formed in the insulating body (14) on the connection side (20) at the third contact terminals (17).

10. An electric motor (3) comprising:
- a stator (4) - electric board (11) assembly according to any one of the preceding claims,
- a support housing (30) connected to the stator (4) - electric board (11) assembly by means of connection screws (18) screwed into a plurality of threaded connection holes (29) formed in the front surface (23) of the connection flange (25),
- an external electronic control board (31) containing electronic and electric power components, accommodated within the support housing (30) and electrically connected to the electric board (11), by insertion and/or tin plating with the third contact terminals (17) at contacting windows (28) delimited by the insulating body (14) and free of overmolded resin,
- a rotor shaft (10) rotatably supported in the bearing-carrier hub (8) by means of bearings (33) positioned in the bearing seats (9),
- a cup-shaped external rotor (32) connected to the rotor shaft (10).

11. An axial fan (1) comprising the electric motor (3) according to claim 10 and an impeller (2) connected to the external rotor (32) of the electric motor (3).

12. A method of manufacturing an electric motor (3), comprising a step of assembling a stator (4) - electric board (11) assembly for an electric motor (3), comprising:
- providing a stator (4) comprising a pack of metal laminations (5) stacked and connected to one another, one or more stator windings (6) and first connection terminals (7) of the windings (6),
- positioning, in the stator (4), a tubular bearing-carrier hub (8) forming one or more bearing seats (9) for supporting and centering a rotor shaft (10), and a connection flange (25),
- providing an electric board (11) comprising a support substrate (15), a contact configuration (12) with a plurality of second connection terminals (16) for powering the stator windings (6), optionally one or more heat protectors (13), and a plurality of third contact terminals (17) for an external electrical connection with the contact configuration (12) and, if present, with the heat protectors (13),
- applying the electric board (11)to the stator (4) by pressure displacement of the electric board (11) against the stator (4) in a direction parallel to a motor axis (19) with simultaneous mechanical insertion of the second connection terminals (16) with the first connection terminals (7), and if present, with simultaneous positioning of the heat protectors (13) in a heat exchange relationship with a respective stator winding (6) of the stator (4),
- making an insulating body (14) by injection overmolding of a polymer resin on and around the stator (4), the bearing-carrier hub (8), and the electric board (11) so as to completely fill the gaps formed therebetween and join the stator (4), the bearing-carrier hub (8), and the electric board (11) in a single self-supporting body,
wherein a front surface (23) of the connection flange (25) and the third contact terminals (17) are oriented in an axial direction with respect to the motor axis (19) towards the outside of the stator (4) - electric board (11) assembly on the same connection side (20) and positioned outside the insulating body (14) and exposed and accessible.

13. A manufacturing method according to claim 12, comprising:
- carrying out the injection overmolding by means of a mold (24) having thrust pins (26) on a side corresponding to the connection side (20),
- when molding the insulating body (14), placing the thrust pins (26) against the electric board (11) towards a rotor side (27) opposite to the connection side (20),
- injecting polymer resin into the mold (24) from the rotor side (27) towards the connection side (20).

14. A manufacturing method according to claim 11 or 12, comprising:
- making the bearing-carrier hub (8) of metal material or aluminum with a first end surface (22) and a second end surface (23) opposite to each other, planar and orthogonal to the motor axis (19),
- using the first end surface (22) and the second end surface (23) for axially supporting the stator (4) - electric board (11) assembly in an injection molding mold (24), and as a reliable and rigid geometric reference for closing the injection molding mold (24).
